# EUROPÄISCHE PATENTSCHRIFT

(11) **EP 1 630 071 B1**
(45) Veröffentlichungstag und Bekanntmachung des Hinweises auf die Patenterteilung: **05.09.2007**
(21) Anmeldenummer: 05107338.5
(22) Anmeldetag: 10.08.2005
(51) Int. Cl.: B62D 15/02, B62D 6/00

(54) **Elektromechanische Lenkung mit dynamischer Lenkempfehlung**
Electromechanical steering with dynamic steering suggestion
Systéme de direction électromecanique avec suggestion de conduire dynamique

(30) Priorität: 26.08.2004 DE 102004041413
(43) Veröffentlichungstag der Anmeldung: 01.03.2006
(73) Patentinhaber: Volkswagen Aktiengesellschaft, 38436 Wolfsburg (DE)
(72) Erfinder: BROSIG, Stefan, 29386, Hankensbüttel (DE)
(74) Vertreter: Beck, Michael Rudolf

(56) Entgegenhaltungen:
- DE-A1- 10 354 662

## Beschreibung

Die Erfindung bezieht sich auf eine elektromechanische Lenkung mit dynamischer Lenkempfehlung, die in einer stabilitätskritischen Fahrsituation, welche aus erfassten Fahrzeugparametern abgeleitet wird, in Abhängigkeit derselben ein Überlagerungslenkmoment erzeugt, über das dem Fahrer eine Lenkempfehlung zur Stabilisierung des Fahrzeugs am Lenkrad haptisch angezeigt wird.

Eine derartige Lenkung wurde auf der Tagung "Aktive Sicherheit durch Fahrerassistenz" der Technischen Universität München vom 11. bis 12.03.2004 von der Firma Bosch Engineering GmbH vorgestellt. Mit einer solchen Lenkung soll in kritischen Fahrsituationen beispielsweise beim Durchfahren einer Kurve oder beim Bremsen auf Fahrbahnen mit inhomogenen Reibwerten (sogenannten µ-Split-Bremssituationen) durch ein Überlagerungslenkmoment eine Lenkempfehlung gegeben werden, mit der der Fahrer durch seinen Lenkseingriff das Fahrzeug schneller stabilisieren kann. Dabei wird gewährleistet, dass der Fahrer die Lenkempfehlung stets übersteuern kann und somit in jeder Fahrsituation Herr des Geschehens bleibt.

Gemäß dem Tagungsbeitrag der Bosch Engineering GmbH werden für eine solche aktive Servolenkung neben der elektromechanischen Lenkung (EPS - Electric Power Steering) und einem ESP-System (ESP - elektronisches Stabilitätsprogramm) keine weiteren Komponenten benötigt. Dementsprechend umfasst die dort vorgeschlagene Konfiguration das ESP-System mit einem Steuergerät, einer Hydraulikeinheit, einem Gierratensensor, einem Beschleunigungssensor, einem Drehzahlfühler und einem Lenkwinkelsensor sowie weiterhin die elektrische Servolenkung mit einem Steuergerät, einer Servoeinheit und einem Lenkmomentensensor. Die für die aktive Servolenkung zusätzlich benötigte Software soll dabei in eines der beiden Steuergeräte implementiert werden.

Die in einer stabilitätskritischen Fahrsituation hiermit erzeugbare Lenkempfehlung darf den Fahrer in bezug auf die Dynamik sowie das Ausmaß des spürbaren Moments nicht überfordern, muss jedoch ausreichend deutlich wahrnehmbar sein. Da Lenkungen für unterschiedliche Anwendungszwecke konfiguriert werden, weisen diese entsprechend unterschiedliche Lenkcharakteristiken auf, die sich durch unterschiedliche Unterstützungskennlinien ausdrücken. So wird beispielsweise bei einem stärker auf Komfort ausgelegten Fahrzeug das vom Aktuator der elektromechanischen Lenkung erzeugte Unterstützungsmoment bei einem vom Fahrer vorgegebenen Lenkmoment größer gewählt, als bei einem eher sportlich ausgelegten Fahrzeug. Im erstgenannten Fall hat der Fahrer dementsprechend geringere Kräfte am Lenkrad aufzubringen als im zweitgenannten Fall, um an den Fahrzeugrädern die gleiche Wirkung zu erzielen. Eine Lenkempfehlung für eine stabilitätskritische Fahrsituation muss dies entsprechend berücksichtigen. Es bietet sich daher an, das Ausmaß der Lenkempfehlung auf die jeweilige Unterstützungskennlinie abzustimmen, indem beispielsweise ein auf die jeweilige Kennlinie abgestimmter Faktor in die Steuerung der Lenkung eingepflegt wird. Dies ist zwar für eine einzelne Fahrzeugkonfiguration praktikabel, führt jedoch beim Einsatz in unterschiedlichen Fahrzeugtypen und Fahrzeugkonfigurationen zu einem hohen Abstimmungsaufwand.

Davon ausgehend liegt der Erfindung die Aufgabe zugrunde, den fahrzeugspezifischen Abstimmungsaufwand bei der Generierung des Überlagerungslenkmoments für eine Lenkempfehlung zu verringern.

Diese Aufgabe wird durch eine elektromechanische Lenkung nach Patentanspruch 1 gelöst. Die erfindungsgemäße Lenkung zeichnet sich dadurch aus, dass der Datentransfer in die Lenkung über eine auf eine Referenz-Unterstützungskennlinie normierte Schnittstelle erfolgt.

Hierdurch sind Modifikationen bei der Datenerzeugung außerhalb der Lenkung nicht erforderlich, um eine an die Unterstützungskennlinie der jeweiligen Lenkung angepasste Lenkempfehlung zu generieren. Vielmehr können aus den erfassten Fahrzeugparametern zunächst auf die Referenz-Unterstützungskennlinie bezogene Signale generiert werden, die dann in der jeweiligen Lenkung in ein geeignetes Überlagerungslenkmoment übersetzt werden.

In einer vorteilhaften Ausgestaltung der Erfindung ist die Generierung des Signals für das Überlagerungsmoment der Lenkung in ein Bremsensteuergerät des Fahrzeugs implementiert. In diesem Fall bietet die Lenkung eine Schnittstelle zur Lenkmomentenbeeinflussung, die vom Bremsensteuergerät bedient wird. Durch die Normierung der Daten auf Seiten des Bremsensteuergeräts muss dieses nicht an die jeweilige Lenkung angepasst werden. Damit können gleichartige Bremsensteuergeräte mit unterschiedlich ausgelegten Lenkungen kombiniert werden. Die Anpassung der seitens des Bremsensteuergeräts zur Verfügung gestellten Informationen für die Lenkempfehlung an die jeweilige Lenkung erfolgt in der Lenkung. Die Generierung der Lenkempfehlung im Bremsensteuergerät bleibt hierbei unverändert. Dies gilt analog auch für andere externe Steuergeräte zur Erzeugung normierter Signale für die Lenkempfehlung.

Bevorzugt wird die Größe des Überlagerungslenkmoments in Abhängigkeit der Unterstützungskennlinie der Lenkung eingestellt. Dadurch ist eine automatische Anpassung der Haptik der Lenkempfehlung an die Lenkungscharakteristik möglich.

Beispielsweise kann bei Aktivierung einer Lenkempfehlung dem das Fahrermoment repräsentierenden Signal ein an die Lenkung angepasstes Signal für das Überlagerungslenkmoment hinzuaddiert werden. Mit dem summarischen Signal wird dann entsprechend der Unterstützungskennlinie der Lenkung das Unterstützungsmoment über den Aktuator der Lenkung eingestellt. Dadurch wird insbesondere eine Anpassung der Lenkempfehlung an das bereits vom Fahrer aufgebrachte Moment erzielt. Bei einer progressiven Unterstützungskennlinie nimmt bei größeren Lenkmomenten des Fahrers das Überlagerungslenkmoment für die Lenkempfehlung tendenziell zu, so dass diese gut spürbar bleibt.

Vorzugsweise wird das zunächst normiert zur Verfügung gestellte Signal für das Überlagerungslenkmoment anhand eines Skalierungsfaktors an die jeweilige Lenkung angepasst. Der Skalierungsfaktor wird automatisch aus der Unterstützungskennlinie der Lenkung und der Referenz-Unterstützungskennlinie ermittelt. Hierdurch lässt sich auf besonders einfache Weise das Ausmaß der Lenkempfehlung auf die jeweilige Lenkungscharakteristik, z. B. eher komfortabel (kleines Überlagerungslenkmoment) oder eher sportlich (größeres Überlagerungslenkmoment) abstimmen. Die Größe des vom Fahrer wahrgenommenen Überlagerungslenkmoments passt sich dann harmonisch in die jeweilige Lenkungscharakteristik ein.

Der unterstützungskennlinienabhängige Skalierungsfaktor kann mit jedem Zündungsstart aus der vorliegenden Lenkung neu errechnet und anschließend vorgehalten werden. Dies gewährleistet bei einer Modifikation der Lenkung stets eine lenkungsspezifische Anpassung der Lenkempfehlung.

Es ist jedoch auch möglich, den Skalierungsfaktor situationsabhängig für jede Lenkempfehlung neu zu bestimmen. Dabei können beispielsweise das vom Fahrer angelegte Lenkmoment und/oder auch weitere Fahrzeugparameter berücksichtigt werden.

Weiterhin kann der Skalierungsfaktor fahrgeschwindigkeitsabhängig verstärkt werden.

Das normierte Signal für das Überlagerungslenkmoment wird vorzugsweise im Bremssteuergerät oder einer anderen externen Recheneinrichtung generiert und an das Steuergerät der Lenkung übermittelt, wo dann die oben erläuterte Anpassung an die jeweilige Lenkung automatisch vorgenommen wird.

Generell, d. h. prinzipiell unabhängig vom Ort der Implementierung, kann das Unterstützungsmoment der Lenkung wie folgt bestimmt werden: Ermitteln der fahrerseitigen Lenkmomentanforderung, bei Feststellung einer stabilitätskritischen Fahrsituation Addition einer vorgegebenen Momentengröße für die Lenkempfehlung, Ermitteln des Unterstützungsmoments der Lenkung aus der fahrzeugspezifischen Unterstützungskennlinie auf der Grundlage des summierten Moments und Aufschalten eines entsprechenden Stellsignals auf den Aktuator der Lenkung.

Gemäß einer weiteren vorteilhaften Ausgestaltung der Erfindung kann beispielsweise in einer µ-Split-Bremssituation das Überlagerungslenkmoment in Abhängigkeit von Bremsdrucksignalen der einzelnen Fahrzeugräder ermittelt werden.

Diese Bremsdrucksignale werden vorzugsweise einfach aus einem elektronischen Stabilitätsprogramm (ESP) abgegriffen, können aber auch geschätzt vorliegen. Durch die Nutzung des ESP bzw. der Bremsdrucksignale desselben kann unmittelbar auf einen stabilitätskritischen Zustand geschlossen werden, so dass die unmittelbare Einbeziehung von Daten weiterer Sensoren für die Bestimmung eines Signals für eine Lenkempfehlung nicht unbedingt erforderlich ist.

Zudem kann das aktuelle Gierverhalten des Fahrzeugs in die Bestimmung des normierten Signals für die Lenkempfehlung einfließen oder diese in Abhängigkeit des Gierverhaltens bestimmt werden. Vorzugsweise erfolgt dies ebenfalls außerhalb der Lenkung, beispielsweise im Bremsensteuergerät, indem z. B. das Überlagerungslenkmoment für die Lenkempfehlung in Abhängigkeit der Abweichung der Ist-Gierrate des Fahrzeugs von einer aus einem Fahrzeugmodell vorgegebenen Soll-Gierrate ermittelt wird.

Nachfolgend wird die Erfindung anhand eines in der Zeichnung dargestellten Ausführungsbeispiels näher erläutert. Die Zeichnung zeigt in:
- Figur 1: eine schematische Ansicht eines Ausführungsbeispiels für eine elektromechanische Lenkung nach der Erfindung,
- Figur 2: eine Darstellung unterschiedlicher Unterstützungskennlinien für verschiedene Lenkcharakteristiken,
- Figur 3: eine Darstellung der automatischen Anpassung der Lenkempfehlung,
- Figur 4: eine Darstellung von µ-Split-Bremssituationen unterschiedlich ausgerüsteter Fahrzeuge, und in
- Figur 5: eine Darstellung der Wirkung einer dynamischen Lenkempfehlung beim Übersteuern in der Kurve im Vergleich zum Eingriff eines elektronischen Stabilitätsprogramms (ESP).

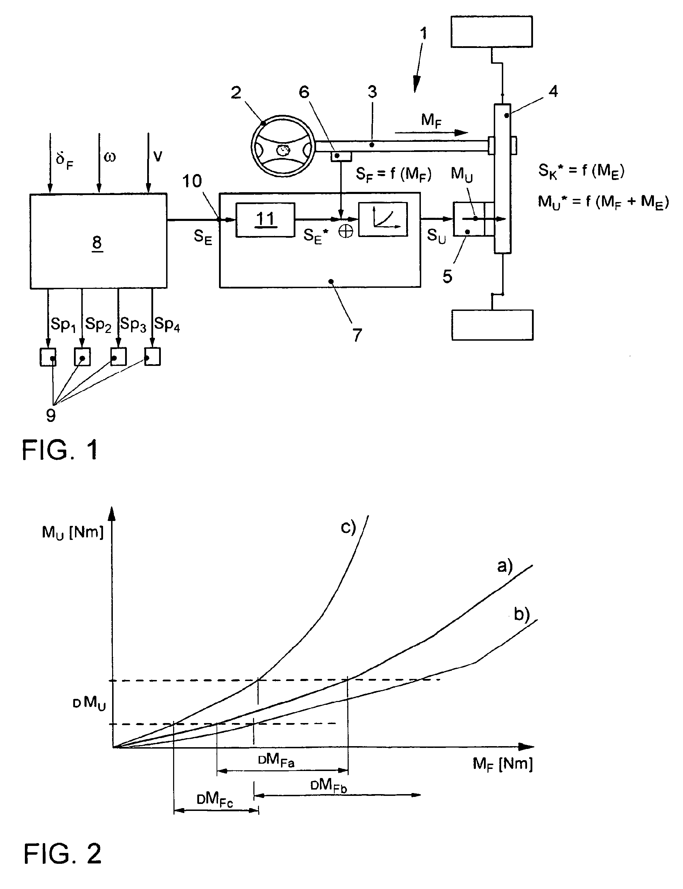

Das Ausführungsbeispiel in Figur 1 zeigt eine elektromechanische Lenkung 1 mit einem Lenkrad 2, einer Lenksäule 3, einem Lenkgetriebe 4 und einem elektrischen Aktuator 5 zur Erzeugung eines Unterstützungsmoments M_{U} in Abhängigkeit des vom Fahrer aufgebrachten Lenkmoments M_{F}. Letzteres wird durch einen geeigneten Sensor 6 erfasst und als Signal S_{F} an das Lenkungssteuergerät 7 übermittelt. Aus dem erfassten Lenkmoment M_{F} des Fahrers wird anhand der für das Fahrzeug vorgegebenen Unterstützungskennlinie das Unterstützungsmoment M_{U} ermittelt und über ein entsprechendes Stellsignal S_{U} am Aktuator 5 eingestellt. An der Lenkung kommen somit beide Momente zur Wirkung. Da die Unterstützung kontinuierlich und stetig erfolgt, ist die Unterstützung am Lenkrad 2 nicht fühlbar. Jedoch kann das Ausmaß der Unterstützung je nach Fahrzeugkonfiguration variieren.

In Figur 2 sind beispielhaft verschiedene Unterstützungskennlinien zur Darstellung unterschiedlicher Lenkcharakteristiken dargestellt. Kennlinie a) repräsentiert den Fall einer moderat komfortablen Auslegung, die als Referenz-Unterstützungskennlinie verwendet werden kann. Kennlinie b) zeigt eine sportliche Auslegung mit geringerer Unterstützung, so dass sich für den Fahrer höhere Lenkmomente ergeben. Kennlinie c) zeigt hingegen den Fall einer sogenannten Mobilitätskennlinie für behindertengerechte Fahrzeuge, die sich durch eine sehr hohe Lenkunterstützung auszeichnet. In diesem Fall ergeben sich für den Fahrer am Lenkrad lediglich geringe Kräfte.

Die Lenkung 1 ist weiterhin mit einem System zur Erzeugung einer dynamischen Lenkempfehlung ausgestattet, das in einer stabilitätskritischen Fahrsituation ein Überlagerungslenkmoment erzeugt, über das dem Fahrer eine Lenkempfehlung zur Stabilisierung des Fahrzeugs am Lenkrad 2 haptisch angezeigt wird. Das Ausmaß der Lenkempfehlung ist so gehalten, dass dieses vom Fahrer jederzeit übersteuert werden kann. Der Fahrer kann somit entscheiden, ob er der Lenkempfehlung folgen möchte oder nicht. Lässt der Fahrer das Lenkrad 2 los, so stellt sich an den Fahrzeugrädern und durch mechanische Kopplung am Lenkrad ein Lenkwinkel ein.

Es hat sich gezeigt, dass durch eine solche haptische Lenkempfehlung am Lenkrad der Fahrer das Fahrzeug in einer stabilitätskritischen Situation schneller stabilisieren kann. Dabei macht man sich zunutze, dass die Reaktionszeiten auf haptische Reize kürzer sind, als auf optische oder akustische Reize.

Durch eine haptische Lenkempfehlung (DSR ― Driver Steering Recommendation) kann beispielsweise das Eingreifen eines Antiblockiersystems (ABS) und/oder eines elektronischen Stabilitätsprogramms (ESP) in bestimmten Situationen vermieden oder zumindest abgeschwächt werden, um bei einer größeren Fahrstabilität eine geringere Spurabweichung und kürzere Bremswege zu realisieren.

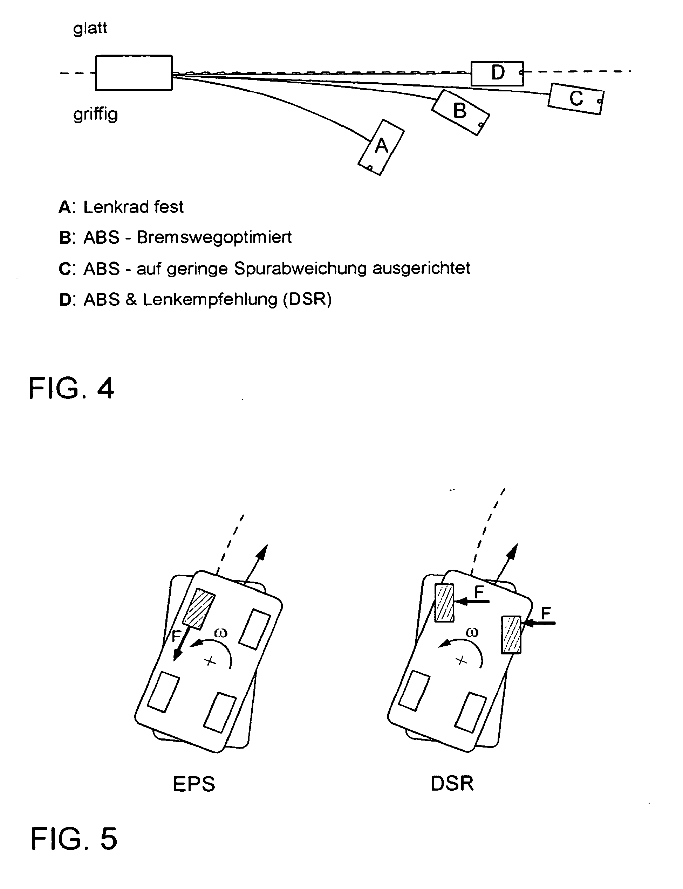

Figur 4 zeigt dies beispielhaft anhand einer µ-Split-Bremssituation für unterschiedlich ausgestattete Fahrzeuge, wobei die linken Räder zunächst auf glattem, die rechten Räder hingegen auf griffigem Untergrund fahren.

In Fahrzeug A wird das Lenkrad während des Bremsvorgangs starr festgehalten. Aufgrund der unterschiedlichen Reibungsbedingungen an den Fahrzeugrädern zieht das Fahrzeug stark nach der griffigen Seite und kann hierbei ins Schleudern geraten. Es ergibt sich zwar der kürzeste Bremsweg der Vergleichsituationen, dies jedoch auf Kosten einer starken, u. U. gefährlichen Spurabweichung, und auch nur, weil auf der griffigen Seite weiterhin hohe Reibwerte auf der Straße vorliegen.

Fahrzeug B ist mit einem Antiblockiersystem ausgerüstet, das auf eine Bremswegminimierung abgestimmt ist. Durch die späte Reaktion des Fahrers kommt es auch hier zu einer deutlichen Spurabweichung und aufgrund des Eingriffs des Antiblockiersystems im Vergleich zu Fahrzeug A zu einem längeren Bremsweg.

Fahrzeug C ist mit einem heute gebräuchlichen Antiblockiersystem ausgerüstet, das stärker auf Stabilität und geringe Spurabweichung abgestimmt ist. Hier kann sich der Fahrer zwar schnell auf die Fahrsituation einstellen. Auf das kurze, anfängliche Ausbrechen des Fahrzeugs reagiert das Antiblockiersystem jedoch mit einer Bremsdruckrücknahme, um ein Ziehen zur griffigeren Seite zu vermeiden. Durch das geringere Bremsen auf der griffigeren Seite ergibt sich jedoch ein längerer Bremsweg.

Fahrzeug D besitzt neben einem Antiblockiersystem zusätzlich ein System zur Erzeugung einer dynamischen Lenkempfehlung (DSR). Hierdurch erhält der Fahrer über ein Überlagerungslenkmoment am Lenkrad einen Hinweis auf die Richtung, in die er lenken muss, um das Fahrzeug stabil zu halten. Dadurch kann die Bremsdruckrücknahme des Antiblockiersystems weniger stark ausfallen, so dass sich neben einer geringen Spurabweichung eine deutliche Verkürzung des Bremswegs gegenüber den heute gebräuchlichen Antiblockiersystemen entsprechend der Konfiguration von Fahrzeug C ergeben kann, sofern der Fahrer der vorgegebenen Lenkempfehlung folgt.

Weiterhin kann durch eine dynamische Lenkempfehlung einem zu starken Übersteuern in der Kurve besser entgegengewirkt werden, als allein mit einem elektronischen Stabilitätsprogramm. Zum einen ergibt sich hierdurch ein Sicherheitsgewinn durch eine größere Fahrstabilität. Zum anderen wird der Fahrkomfort durch einen späteren, schwächeren oder vollständigen Entfall des ESP-Eingriffs verbessert. Figur 5 zeigt links den zur Stabilisierung des Fahrzeugs erforderlichen Bremseingriff des elektronischen Stabilitätsprogramms. Durch die Bremskraft am linken Vorderrad wird das Fahrzeug in die richtige Spur zurückgedreht. Rechts ist zum Vergleich ein durch eine Lenkempfehlung (DSR) angeregtes Gegenlenken des Fahrers dargestellt. Dadurch kann der gleiche Effekt wie bei einem ESP-Eingriffs erzielt werden, ohne dass ein solcher im ursprünglichen Ausmaß erforderlich wäre.

Erfindungsgemäß wird die Funktion des Auslösens und der Bestimmung der Lenkempfehlung in das Bremsensteuergerät 8 des Fahrzeugs oder eine andere Recheneinrichtung außerhalb der Lenkung 1 implementiert. Die Lenkung 1 wird hierbei als Aktor eingesetzt, die durch das ESP gesteuert ein Überlagerungslenkmoment M_{K} für eine Lenkempfehlung erzeugt, das mittels des elektrischen Aktuators 5 zugestellt und für den Fahrer am Lenkrad 2 spürbar ist. Zwischen dem Bremsensteuergerät 8 und der Lenkung 1 ist hierfür eine geeignete Schnittstelle 10 zur Lenkmomentbeeinflussung vorgesehen.

Diese Schnittstelle 10 ist so ausgelegt, dass die für die Generierung des Überlagerungslenkmoments benötigten Daten vom Bremsensteuergerät 8 oder einer externen Steuereinheit in normierter Weise an die Lenkung 1 transferiert werden. Dadurch bleiben die Modifikationen außerhalb der Lenkung 1 minimal. Eine Anpassung des Überlagerungslenkmoments M_{K} erfolgt vielmehr in Abhängigkeit der Unterstützungskennlinie der Lenkung 1, wodurch die Haptik automatisch auf die jeweilige Lenkungscharakteristik abgestimmt werden kann.

Die Algorithmen zur Erkennung einer stabilitätskritischen Fahrsituation sind Bestandteil des elektronischen Stabilitätsprogramms ESP, das in das Bremsensteuergerät 8 implementiert ist. Für die Bestimmung des Überlagerungslenkmoments M_{K} kann dabei weitgehend auf die zugehörigen Erkennungs- und Failsafe-Algorithmen zurückgegriffen werden, welche unter anderem Fahrzeugdaten wie den Lenkwinkel δ_{F,} die Gierrate ω und die Fahrgeschwindigkeit v auslesen. In einer stabilitätskritischen Fahrsituation werden hieraus individuelle Bremsdrucksignale S_{Pi} für die einzelnen Fahrzeugbremsen 9 erzeugt.

Das erfindungsgemäße System zur Generierung der Lenkempfehlung (DSR) baut im Fall einer µ-Split-Bremssituation auf den im Bremsensteuergerät 8 ermittelten oder geschätzten Bremsdrucksignalen S_{Pi} auf, so dass simultan mit der Erfassung einer stabilitätskritischen Situation ein Signal S_{E} für eine Lenkempfehlung aufgebaut wird. Im Übersteuerfall wird eine kritische Fahrsituation anhand der Abweichung der tatsächlichen Gierrate des Fahrzeugs von einer Soll-Gierrate eines Fahrzeugmodels ermittelt. In beiden Fällen kann damit beispielsweise ein Korrekturlenkwinkel bestimmt werden, aus dem eine Lenkempfehlung für das Lenkrad errechnet und ausgegeben wird.

Das entsprechende Signal S_{E} für die Lenkempfehlung ist auf eine Referenz-Unterstützungskennlinie der Lenkung 1 normiert sein. Auf Seiten der Lenkung 1 erfolgt dann eine automatische Skalierung dieses Signals S_{E} mit Hilfe der betreffenden Unterstützungskennlinie der gewünschten Lenkungscharakteristik. Dies hat den Vorteil, dass nicht für jede Lenkungskennlinie eine individuelle Zusatzkennlinie für das Überlagerungslenkmoment ermittelt und vorgehalten werden muss.

Das resultierende, modifizierte Signal S_{E}* wird dann mit der Lenkmomentenanforderung M_{F} des Fahrers, das heißt mit dem entsprechenden Signal S_{F} des Lenkmomentensensors 6 summiert.

Anschließend wird mit Hilfe des summierten Signals S_{F}+S_{E}* anhand der betreffenden Unterstützungskennlinie das Unterstützungsmoment M_{U} ermittelt und in Form eines entsprechenden Stellsignals S_{U} an den Aktuator 5 der Lenkung übermittelt. Das Unterstützungsmoment M_{U} beinhaltet dabei neben der aus dem Fahrermoment M_{F} resultierenden Komponente weiterhin eine Komponente aus dem an die Lenkung angepassten Signal S_{E}* für das Überlagerungslenkmoment (M_{E}) der Lenkempfehlung.

Das Unterstützungsmoment der Lenkung wird somit wie folgt bestimmt. Zunächst wird die fahrerseitige Lenkmomentanforderung ermittelt. Im normalen Fahrbetrieb wird hierzu entsprechend der Unterstützungskennlinie der Lenkung das zugehörige Unterstützungsmoment am Aktuator 5 der Lenkung eingestellt. In diesem Fall liegt lediglich ein Signal S_{F} an. Das Signal S_{E}* ist hingegen Null.

Bei Feststellung einer stabilitätskritischen Fahrsituation wird der fahrerseitigen Lenkmomentenanforderung (Signal S_{F}) hingegen eine Momentengröße (Signal S_{E}*) für die Lenkempfehlung hinzuaddiert. Auf der Grundlage des summarischen Lenkmoments wird dann anhand der fahrzeugspezifischen Unterstützungskennlinie wiederum das zugehörige Unterstützungsmoment (Signal S_{U}) ermittelt und am Aktuator 5 der Lenkung eingestellt.

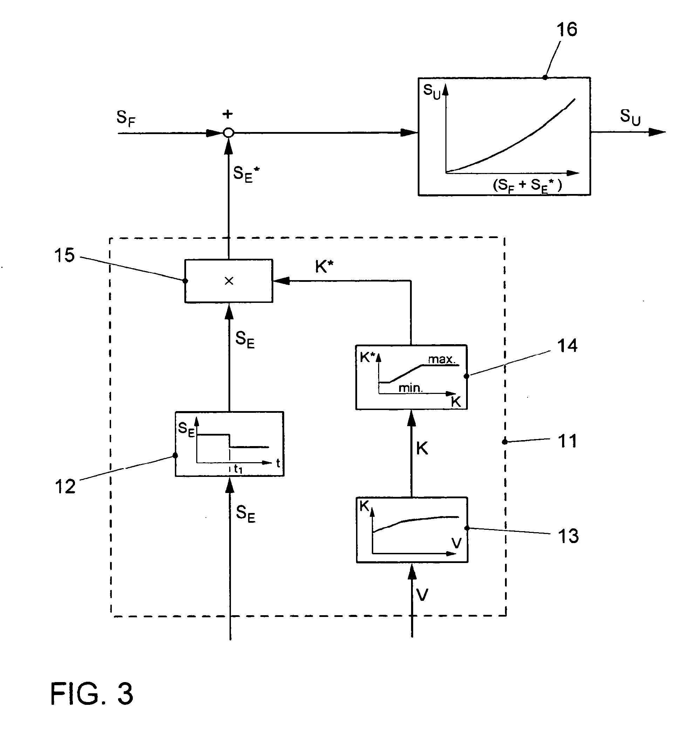

Im folgenden soll nun anhand der Figuren 2 und 3 die Bestimmung der an die Lenkung angepassten Lenkempfehlung in Form des Signals S_{E}* aus der von dem Bremsensteuergerät 8 zur Verfügung gestellten, normierten Lenkempfehlung in Form des Signals S_{E} näher erläutert werden. Hierzu ist in dem Lenkungssteuergerät 7 eine entsprechende Berechnungseinheit softwaretechnisch oder hardwaretechnisch vorgesehen, die in Figur 1 und Figur 3 jeweils mit dem Bezugszeichen 11 gekennzeichnet ist.

In der Berechnungseinheit 11 wird das ankommende normierte Lenkempfehlungssignal **S** _{E,} das auf die Referenz-Übersetzungskennlinie a) in Figur 2 abgestimmt ist zunächst in Prozedur 12 einer zeitlichen Begrenzung unterworfen, die in dem hier dargestellten Ausführungsbeispiel als Signalabschwächung nach einem Zeitintervall t₁ realisiert ist, das in der Größenordnung von einigen hundert Millisekunden liegt. Dies dient vor allem der Verbesserung der Eigensicherheit der Lenkung. Zudem wird nach der Erzielung eines Aufmerksamkeitseffekts durch ein anfänglich höheres Moment das weitere Anliegen der Lenkmomentempfehlung bei einem geringeren Momentenniveau vom Fahrer gut erkannt. Die Prozedur 12 wird hier auf Seiten der Lenkung ausgeführt, kann jedoch alternativ auch in das Bremsensteuergerät 8 implementiert sein, so dass bereits von dort ein Signal S_{E} mit dem geschilderten zeitlichen Verlauf zur Verfügung gestellt werden kann.

Das normierte Lenkempfehlungssignal S_{E} wird anschließend anhand eines Skalierungsfaktors k bzw. k* an die Lenkung angepasst. Dessen Ermittlung leitet sich wie folgt aus der jeweiligen Unterstützungskennlinie der Lenkung im Verhältnis zu einer Referenz-Unterstützungskennlinie a) ab.

Wie Figur 2 entnommen werden kann, ergibt sich je nach Kennlinie für ein vom Fahrer an Lenkrad aufgebrachtes Lenkmoment M_{F} ein bestimmtes Unterstützungsmoment M_{U} des Aktuators bzw. Motors 5 der Lenkung 1. Für die Fahrreaktion des Fahrzeugs entscheidend ist dabei das Unterstützungsmoment M_{U}. Um bei einer sportlichen Auslegung entsprechend Kennlinie b) eine bestimmte Fahrreaktion auszulösen, muss dort vom Fahrer ein deutlich höheres Moment aufgebracht werden als beispielsweise im Fall einer Mobilitätskennlinie c) für eine behindertengerechte Auslegung mit geringen Handkräften. Umgekehrt führt ein bestimmtes Lenkmoment bei der sportlichen Kennlinie b) zu einem kleineren Unterstützungsmoment, bei der Mobilitätskennlinie c) zu einem größeren Unterstützungsmoment. Würde man eine auf die zwischen den Kennlinien b) und c) liegende Referenzkennlinie a) bezogene Lenkempfehlung unangepasst aufschalten, so ergäbe sich für den Fall der Mobilitätskennlinie c) am Lenkrad 2 ein zu starker Impuls, im Fall der sportlichen Kennlinie b) hingegen ein zu schwacher Impuls.

Aus diesem Grunde wird eine Skalierung vorgenommen, die hier beispielhaft auf einen vorgegebenen Bereich des Unterstützungsmoments ΔM_{U} bezogen ist. Für die sportliche Kennlinie b) errechnet sich der Skalierungsfaktor k als Quotient der entsprechenden Lenkmomentdifferenzen ΔM_{Fb}/ ΔM_{Fa} (hier > 1),für die Mobilitätskennlinie c) als Δ M_{Fc}/ΔM_{Fa} (hier < 1). Zusätzlich kann der Skalierungsfaktor in Abhängigkeit der Fahrgeschwindigkeit v verstärkt werden, wie dies in Prozedur 13 gezeigt ist.

Weiterhin ist es fakultativ möglich, den Skalierungsfaktor k durch einen Filter 14 auf vorgegebene Minimal- und Maximalwerte zu begrenzen.

Mit dem Skalierungsfaktor k bzw. dem gegebenenfalls begrenzten Skalierungsfaktor k* wird dann durch eine Multiplikationsprozedur 15 aus dem normierte Lenkempfehlungssignal S_{E} das an die Lenkung angepasste Lenkempfehlungssignal S_{E}* errechnet und mit dem fahrerseitigen Signal S_{F} zusammengeführt. Das summarische Signal dient der Bestimmung des an dem Aktuator 5 der Lenkung 1 einzustellenden Unterstützungsmoments M_{U} bzw. des Stellsignals S_{U} mittels der Unterstützungskennlinie 16 der Lenkung 1.

In Abwandlung des Ausführungsbeispiels kann anstelle des Filters 14 ein diesem entsprechender Filter nach der Multiplikationsprozedur 15 vorgesehen werden, so dass dann eine Begrenzung des angepassten Lenkempfehlungssignals S_{E}* erfolgt.

Der Skalierungsfaktor k kann mit jedem Zündungsstart anhand der in der Lenkung abgelegten Daten der zugehörigen Unterstützungskennlinie neu errechnet und dann vorgehalten werden. Dies ist ohne großen Aufwand leicht zu realisieren. Möglich ist jedoch auch eine situationsabhängige Skalierung, bei der der Skalierungsfaktor k für jedes neue Signal einer Lenkempfehlung unter Berücksichtigung weiterer Parameter wie beispielsweise dem vom Fahrer angelegten Lenkmoment M_{F}, etc. individuell berechnet wird.

In sämtlichen Fällen verspürt der Fahrer bei einer aktiven Lenkempfehlung eine stets ähnliche Reaktion und Haptik am Lenkrad. Dies fördert die Akzeptanz und das Vertrauen in das System.

Durch die vorstehend erläuterte in Generierung des Überlagerungsmoments werden die hierfür benötigten Maßnahmen außerhalb der Lenkung minimal gehalten. Zudem ergibt sich durch die Verwendung einer Referenz-Unterstützungskennlinie eine automatische Anpassung des Ausmaßes des Überlagerungslenkmoments für die Lenkempfehlung in Entsprechung zu der jeweiligen Lenkungscharakteristik.

In Abwandlung des Ausführungsbeispiels können auch weitere Schritte zur Bestimmung des Überlagerungslenkmoments in das Bremsensteuergerät 8 oder in eine andere externe Steuereinheit implementiert werden. Weiterhin ist es möglich, die Bestimmung des Signals S_{E} in das Lenkungssteuergerät 7 zu verlegen. In diesem Fall werden dann z.B. die Bremssignale und die Gierratenabweichung an die Lenkung 1 übermittelt.

Die Erfindung wurde vorstehend anhand eines bevorzugten Ausführungsbeispiels näher erläutert. Sie ist jedoch nicht auf dieses beschränkt, sondern umfasst vielmehr alle durch die Patentansprüche definierten Ausgestaltungen.

### BEZUGSZEICHENLISTE

- 1: elektromechanische Lenkung
- 2: Lenkrad
- 3: Lenksäule
- 4: Lenkgetriebe
- 5: Aktuator (z.B. Elektromotor)
- 6: Lenkmomentsensor
- 7: Lenkungssteuergerät
- 8: Bremsensteuergerät
- 9: Radbremse
- 10: Schnittstelle
- 11: Berechnungseinheit
- 12: zeitliche Begrenzungsprozedur
- 13: Prozedur zur Bestimmung des Skalierungsfaktors
- 14: Minimaxfilter
- 15: Multiplikationsprozedur
- 16: Unterstützungskennlinie
- k: Skalierungsfaktor
- k*: gefilterter Skalierungsfaktor
- S_{E}: normiertes Lenkempfehlungssignal
- S_{E}*: an die Lenkung angepasstes Lenkempfehlungssignal
- S_{F}: Signal des Fahrerlenkmoments M_{F}
- S_{Pi}: Bremsdrucksignal
- S_{U}: Stellsignal für den Aktkurator 5
- v: Fahrgeschwindigkeit
- t₁: Zeitintervall
- M_{E}: Überlagerungslenkmoments (Lenkempfehlung)
- M_{F}: fahrerseitiges Lenkmoment
- M_{U}: Unterstützungsmoment
- δ_{F}: Lenkwinkel
- ω: Gierrate

## Patentansprüche

1. Elektromechanische Lenkung mit dynamischer Lenkempfehlung, die in einer stabilitätskritischen Fahrsituation, welche aus erfassten Fahrzeugparametern abgeleitet wird, in Abhängigkeit derselben ein Überlagerungslenkmoment (M_{E}) erzeugt, über das dem Fahrer eine Lenkempfehlung zur Stabilisierung des Fahrzeugs am Lenkrad (2) haptisch angezeigt wird, **dadurch gekennzeichnet, dass** der Datentransfer in die Lenkung (1) über eine auf eine Referenz-Unterstützungskennlinie normierte Schnittstelle (10) erfolgt.

2. Elektromechanische Lenkung nach Anspruch 1, **dadurch gekennzeichnet, dass** die Größe des Überlagerungslenkmoments (M_{E}) in Abhängigkeit der Unterstützungskennlinie der Lenkung (1) eingestellt wird.

3. Elektromechanische Lenkung nach Anspruch 1 oder 2, **dadurch gekennzeichnet, dass** der Lenkung (1) ein normiertes Signal (s_{E}) für das Überlagerungslenkmoment (M_{E}) zugeführt wird, das lenkungsseitig an die Lenkung (1) angepasst wird.

4. Elektromechanische Lenkung nach einem der Ansprüche 1 bis 3, **dadurch gekennzeichnet, dass** die Generierung des Signals (s_{E}) für das Überlagerungsmoment (M_{E}) der Lenkung (1) in ein Bremsensteuergerät (8) des Fahrzeugs implementiert ist.

5. Elektromechanische Lenkung nach einem der Ansprüche 1 bis 4, **dadurch gekennzeichnet, dass** bei Aktivierung einer Lenkempfehlung auf das das Fahrermoment (M_{F}) repräsentierende Signal (s_{F}) ein an die Lenkung angepasstes Signal (s_{E}*) für das Überlagerungslenkmoment (M_{E}) addiert und mit dem summarischen Signal (s_{F}+s_{E}*) entsprechend der Unterstützungskennlinie der Lenkung (1) ein Unterstützungsmoment (M_{U}) über einen Aktuator (5) der Lenkung (1) eingestellt wird.

6. Elektromechanische Lenkung nach Anspruch 5, **dadurch gekennzeichnet, dass** aus der Unterstützungskennlinie der Lenkung (1) und der Referenz-Unterstützungskennlinie ein Skalierungsfaktor (k, k*) ermittelt wird, und dass aus dem normierten Signal (s_{E}) unter Berücksichtigung des Skalierungsfaktors (k, k*) das an die Lenkung angepasste Signal (s_{E}*) generiert wird.

7. Elektromechanische Lenkung nach Anspruch 6, **dadurch gekennzeichnet, dass** der Skalierungsfaktor (k, k*) mit jedem Zündungsstart neu errechnet wird.

8. Elektromechanische Lenkung nach Anspruch 6, **dadurch gekennzeichnet, dass** der Skalierungsfaktor (k, k*) für jedes Signal einer Lenkempfehlung unter Berücksichtigung weiterer Parameter wie beispielsweise dem vom Fahrer angelegten Lenkmoment (M_{F}), etc., situationsabhängig errechnet wird.

9. Elektromechanische Lenkung nach einem der Ansprüche 6 bis 8, **dadurch gekennzeichnet, dass** der Skalierungsfaktor (k, k*) fahrgeschwindigkeitsabhängig verstärkt wird.

10. Elektromechanische Lenkung nach einem der Ansprüche 3 bis 9, **dadurch gekennzeichnet, dass** das normierte Signal (s_{E}) für das Überlagerungslenkmoment zeitlich begrenzt wird.

11. Elektromechanische Lenkung nach nach Anspruch 10, **dadurch gekennzeichnet, dass** normierte Signal (s_{E}) nach einem vorgegebenen Zeitintervall (t₁)vermindert wird.

12. Elektromechanische Lenkung nach einem der Ansprüche 1 bis 11, **dadurch gekennzeichnet, dass** das Unterstützungsmoment (M_{U}) der Lenkung wie folgt bestimmt wird:
- Ermittlung der fahrerseitigen Lenkmomentanforderung,
- bei Feststellung einer stabilitätskritischen Fahrsituation Addition einer vorgegebenen Momentengröße für die Lenkempfehlung,
- Ermittlung des Unterstützungsmoments (M_{U}) der Lenkung aus der fahrzeugspezifischen Unterstützungskennlinie auf der Grundlage des summierten Moments, und
- Aufschaltung eines entsprechenden Stellsignals (s_{A}) auf den Aktuator (5) der Lenkung (1).

13. Elektromechanische Lenkung nach einem der Ansprüche 1 bis 12, **dadurch gekennzeichnet, dass** in einer µ-Split-Bremssituation das Überlagerungslenkmoment (M_{E}) in Abhängigkeit von Bremsdrucksignalen (s_{Pi}) der einzelnen Fahrzeugräder ermittelt wird.

14. Elektromechanische Lenkung nach Anspruch 13, **dadurch gekennzeichnet, dass** die Bremsdrucksignale (s_{Pi}) aus einem elektronischen Stabilitätsprogramm (ESP) abgegriffen werden.

15. Elektromechanische Lenkung nach Anspruch 13 oder 14, **dadurch gekennzeichnet, dass** die Bremsdrucksignale (s_{Pi}) als Schätzwerte vorliegen.

16. Elektromechanische Lenkung nach einem der Ansprüche 1 bis 15, **dadurch gekennzeichnet, dass** das Überlagerungslenkmoment (M_{E}) in Abhängigkeit der Abweichung der Ist-Gierrate des Fahrzeugs von einer aus einem Fahrzeugmodell vorgegebenen Soll-Gierrate ermittelt wird.

## Claims

1. Electromechanical steering system with a dynamic steering recommendation which, in a driving situation which is critical for stability and which is derived from sensed vehicle parameters, generates a superimposition steering torque (M_{E}) as a function thereof, by means of which superimposition steering torque (M_{E}) a steering recommendation for stabilizing the vehicle is indicated haptically to the driver at the steering wheel (2), **characterized in that** the data transfer into the steering system (1) is carried out by means of an interface (10) which is standardized to a reference assistance characteristic curve.

2. Electromechanical steering system according to Claim 1, **characterized in that** the magnitude of the superimposition steering torque (M_{E}) is set as a function of the assistance characteristic curve of the steering system (1).

3. Electromechanical steering system according to Claim 1 or 2, **characterized in that** the steering system (1) is supplied with a standardized signal (s_{E}) for the superimposition steering torque (M_{E}) which is adapted to the steering system (1) at the steering system end.

4. Electromechanical steering system according to one of Claims 1 to 3, **characterized in that** the generation of the signal (s_{E}) for the superimposition torque (M_{E}) of the steering system (1) is implemented in a brake control device (8) of the vehicle.

5. Electromechanical steering system according to one of Claims 1 to 4, **characterized in that**, when a steering recommendation is activated, a signal (s_{E}*), adapted to the steering system, for the superimposition steering torque (M_{E}) is added to the signal (s_{F}) which represents the driver's torque (M_{F}) and an assistance torque (M_{U}) is set by means of an actuator (5) of the steering system (1) using the sum signal (s_{F} + s_{E}*) corresponding to the assistance characteristic curve of the steering system (1).

6. Electromechanical steering system according to Claim 5, **characterized in that** a scaling factor (k, k*) is determined from the assistance characteristic curve of the steering system (1) and the reference assistance characteristic curve, and **in that** the signal (s_{E}*) which is adapted to the steering system is generated from the standardized signal (s_{E}) taking into account the scaling factor (k, k*).

7. Electromechanical steering system according to Claim 6, **characterized in that** the scaling factor (k, k*) is newly calculated at each ignition start.

8. Electromechanical steering system according to Claim 6, **characterized in that** the scaling factor (k, k*) for each signal of a steering recommendation is calculated as a function of the situation taking into account further parameters such as, for example, the steering torque (M_{F}) which is applied by the driver, etc.

9. Electromechanical steering system according to one of Claims 6 to 8, **characterized in that** the scaling factor (k, k*) is amplified as a function of the velocity.

10. Electromechanical steering system according to one of Claims 3 to 9, **characterized in that** the standardized signal (s_{E}) is chronologically limited for the superimposition steering torque.

11. Electromechanical steering system according to Claim 10, **characterized in that** the standardized signal (s_{E}) is reduced after a predefined time interval (t₁).

12. Electromechanical steering system according to one of Claims 1 to 11, **characterized in that** the assistance torque (M_{U}) of the steering system is determined as follows:
- the steering torque request by the driver is identified,
- if a driving situation which is critical for stability is detected, a predefined torque variable is added for the steering recommendation,
- the assistance torque (M_{U}) of the steering system is identified from the vehicle-specific assistance characteristic curve on the basis of the summed torque, and
- a corresponding actuation signal (s_{A}) is connected to the actuator (5) of the steering system (1).

13. Electromechanical steering system according to one of Claims 1 to 12, **characterized in that** in a µ-split braking situation the superimposition steering torque (M_{E}) is identified as a function of brake pressure signals (s_{Pi}) of the individual vehicle wheels.

14. Electromechanical steering system according to Claim 13, **characterized in that** the brake pressure signals (s_{Pi}) are tapped from an electronic stability program (ESP).

15. Electromechanical steering system according to Claim 13 or 14, **characterized in that** the brake pressure signals (s_{Pi}) are present as estimated values.

16. Electromechanical steering system according to one of Claims 1 to 15, **characterized in that** the superimposition steering torque (M_{E}) is identified as a function of the deviation of the actual yaw rate of the vehicle from a setpoint yaw rate which is predefined from a vehicle model.

## Revendications

1. Système de direction électromécanique avec recommandation de direction mécanique qui, dans une situation de conduite critique pour la stabilité qui est déduite de paramètres détectés du véhicule, produit en fonction de ces paramètres un couple de direction superposé (M_{E}) au moyen duquel le conducteur perçoit de façon tactile au niveau du volant de direction (2) une recommandation de direction pour stabiliser lé véhicule, **caractérisé en ce que** le transfert de données dans le système de direction (1) s'effectue par l'intermédiaire d'une interface (10) normalisée à une courbe caractéristique d'assistance de référence.

2. Système de direction électromécanique selon la revendication 1, **caractérisé en ce que** la valeur du couple de direction superposé (M_{E}) est réglée en fonction de la courbe caractéristique d'assistance du système de direction (1).

3. Système de direction électromécanique selon la revendication 1 ou 2, **caractérisé en ce que** le système de direction (1) reçoit un signal normalisé (S_{E}) pour le couple de direction superposé (M_{E}), signal qui est adapté au système de direction (1) dans ce dernier.

4. Système de direction électromécanique selon l'une quelconque des revendications 1 à 3, **caractérisé en ce que** la production du signal (S_{E}) pour le couple de direction superposé (M_{E}) du système de direction (1) est mise en oeuvre dans un appareil (8) de commande des freins du véhicule.

5. Système de direction électromécanique selon l'une quelconque des revendications 1 à 4, **caractérisé en ce que**, lors de l'activation d'une recommandation de direction, on ajoute au signal (S_{F}) représentant le couple (M_{F}) appliqué par le conducteur un signal (S_{E}*) adapté au système de direction pour le couple de direction superposé (M_{E}) et, avec le signal totalisé (S_{F}+S_{E}*), on règle en fonction de la courbe caractéristique d'assistance du système de direction (1) un couple d'assistance (M_{U}) par l'intermédiaire d'un actionneur (5) du système de direction (1).

6. Système de direction électromécanique selon la revendication 5, **caractérisé en ce qu'**on détermine un facteur de cadrage (k, k*) à partir de la courbe caractéristique d'assistance du système de direction (1) et de la courbe caractéristique d'assistance de référence, et **en ce que** le signal (S_{E}*) adapté au système de direction est généré à partir du signal normalisé (S_{E}) en tenant compte du facteur de cadrage (k, k*).

7. Système de direction électromécanique selon la revendication 6, **caractérisé en ce que** le facteur de cadrage (k, k*) est recalculé à chaque mise en marche de l'allumage.

8. Système de direction électromécanique selon la revendication 6, **caractérisé en ce que** le facteur de cadrage (k, k*) est calculé pour chaque signal de recommandation de direction en fonction de la situation, en tenant compte de paramètres supplémentaires comme par exemple le couple de direction (M_{F}) appliqué par le conducteur, etc.

9. Système de direction électromécanique selon l'une quelconque des revendications 6 à 8, **caractérisé en ce que** le facteur de cadrage (k, k*) est amplifié en fonction de la vitesse de marche.

10. Système de direction électromécanique selon l'une quelconque des revendications 3 à 9, **caractérisé en ce que** le signal normalisé (S_{E}) pour le couple de direction superposé est limité dans le temps.

11. Système de direction électromécanique selon la revendication 10, **caractérisé en ce que** le signal normalisé (S_{E}) est diminué au bout d'un intervalle de temps prédéfini (t₁).

12. Système de direction électromécanique selon l'une quelconque des revendications 1 à 11, **caractérisé en ce que** le couple d'assistance (M_{U}) du système de direction est déterminé comme suit :
- détermination de la requête de couple de direction de la part du conducteur,
- en cas de constatation d'une situation de conduite critique pour la stabilité, addition d'une valeur de couple prédéfinie pour la recommandation de direction,
- détermination du couple d'assistance (M_{U}) du système de direction à partir de la courbe caractéristique d'assistance spécifique du véhicule, sur la base du couple totalisé, et
- affectation d'un signal de commande correspondant (S_{A}) à l'actionneur (5) du système de direction (1).

13. Système de direction électromécanique selon l'une quelconque des revendications 1 à 12, **caractérisé en ce que**, dans une situation de freinage « µ split » (route à adhérence non homogène), le couple de direction superposé (M_{E}) est déterminé en fonction de signaux (S_{Pi}) de pression de freinage des différentes roues du véhicule.

14. Système de direction électromécanique selon la revendication 13, **caractérisé en ce que** les signaux (S_{Pi}) de pression de freinage sont prélevés dans un dispositif ESP (programme de stabilité électronique).

15. Système de direction électromécanique selon la revendication 13 ou 14, **caractérisé en ce que** les signaux (S_{Pi}) de pression de freinage sont présents sous forme de valeurs estimées.

16. Système de direction électromécanique selon l'une quelconque des revendications 1 à 15, **caractérisé en ce que** le couple de direction superposé (M_{E}) est déterminé en fonction de l'écart du taux de lacet réel du véhicule par rapport à un taux de lacet de consigne prédéfini à partir d'un modèle de véhicule.
